# FASCICULE DE BREVET EUROPEEN

(11) **EP 2 611 749 B1**
(45) Date de publication et mention de la délivrance du brevet: **14.03.2018**
(21) Numéro de dépôt: 11751595.7
(22) Date de dépôt: 31.08.2011
(51) Int. Cl.: C03C 17/00, C03C 17/34, G02B 1/11

(54) **SUBSTRAT VERRIER REVÊTU D'UNE COUCHE ANTI-RÉFLÉCHISSANTE**
MIT EINER ANTIREFLEXIONSSCHICHT ÜBERZOGENES GLASSUBSTRAT
GLASS SUBSTRATE COATED WITH AN ANTI-REFLECTIVE LAYER

(30) Priorité: 29.06.2011 EP 11171971; 01.09.2010 EP 10174923
(43) Date de publication de la demande: 10.07.2013
(73) Titulaire: AGC Glass Europe, 1348 Louvain-la-Neuve (BE); Asahi Glass Company, Limited, Chiyoda-ku Tokyo 100-8405 (JP); AGC Flat Glass North America, Inc., Alpharetta, GA 30022 (US)
(72) Inventeur: LECOLLEY, François, B-6040 Jumet (BE); OUDARD, Jean-François, B-6040 Jumet (BE)
(74) Mandataire: Chabou, Samia
(86) Numéro de dépôt international: PCT/EP2011/064935
(87) Numéro de publication internationale: WO 2012/028626

(56) Documents cités:
- WO-A1-2011/087666
- DE-A1-102005 020 168
- DE-A1-102007 058 927
- DE-U1-202008 003 804
- JP-A- 8 122 501
- US-A- 4 374 158
- US-A1- 2008 295 884

## Description

La présente invention concerne un substrat verrier revêtu, en particulier un substrat verrier comportant une couche anti-réfléchissante (AR) à performances opto-énergétiques améliorées en transmission et présentant une bonne durabilité mécanique et chimique.

Les couches anti-réfléchissantes sont largement utilisées afin d'augmenter la transmission lumineuse et énergétique et d'éliminer les réflexions du verre. La réduction de la réflexion de la lumière à la surface d'un substrat de verre est souhaitée pour de nombreuses applications telles que des vitrines, des cadres, des dispositifs photovoltaïques (par exemple, des cellules solaires), des serres, etc. En particulier, dans le cas des applications solaires de type photovoltaïque, il est évidemment très avantageux de diminuer la quantité de rayonnement qui est réfléchie par le substrat verrier d'une cellule solaire, augmentant ainsi la quantité de rayonnement qui fait son chemin vers la couche active (par exemple, un film de transfert photoélectrique comme un semi-conducteur tel que le silicium amorphe, le silicium microcristallin ou bien une couche photoélectriquement active choisie parmi le CdTe, un alliage Cuivre-Indium-Gallium-Sélénium, la concentration d'indium et de gallium pouvant varier du séléniure de cuivre et d'indium pur à du séléniure de cuivre et de gallium pur, ou un alliage Cuivre-Indium-Sélénium, ces alliages étant connus de l'homme de métier sous l'acronyme CIGS ou CIS.

Dans le cas de couches anti-réfléchissantes destinées à diminuer ou éliminer les réflexions du verre, le matériau utilisé le plus couramment est la silice ou oxyde de silicium, sous forme de monocouche ou d'empilement. En particulier, des monocouches d'oxyde de silicium poreux donnent de bonnes performances en termes de propriétés antireflets. De manière générale, plus la porosité est importante, plus l'indice de réfraction du revêtement est faible. Ainsi, il a été démontré que par l'acquisition d'une porosité suffisante, des revêtements de silice ayant des indices de réfraction de 1,2 à 1,3 peuvent être produits. A titre indicatif, une couche en silice non poreuse (dense) a typiquement un indice de réfraction de l'ordre de 1,45.

De telles couches poreuses sont typiquement obtenues en introduisant un agent porogène dans le précurseur destiné au dépôt de ladite couche. Cet agent porogène peut être de nature organique, sa combustion ultérieure crée alors les pores dans la couche. Il peut également être de nature minérale, sous forme de particules, et reste donc dans la couche même après une étape de traitement thermique. En particulier, il a été montré qu'il était possible de générer une couche poreuse de silice en combinant des particules de silice colloïdale et de la silice provenant d'un précurseur de type silane dans un procédé de type sol-gel.

Néanmoins, de telles couches anti-réfléchissantes en silice poreuse présentent des inconvénients. En effet, l'augmentation de la porosité d'un revêtement en général entraîne une diminution de leur résistance mécanique et chimique, raison pour laquelle il existe des problèmes de durabilité à l'environnement extérieur, de dégradation due aux effets de l'abrasion durant, par exemple, le nettoyage des revêtements.

Pour réduire ce phénomène de diminution de la résistance mécanique et/ou chimique du revêtement de silice poreuse, il peut être dopé, par exemple via l'incorporation d'éléments tels que l'Al, le Zr, le B, le Sn ou le Zn sous forme d'oxyde. En particulier, l'aluminium est connu pour donner de bons résultats dans ce contexte. Malheureusement, du fait de l'indice de réfraction significativement plus élevé de l'oxyde d'aluminium par rapport à la silice (de l'ordre de 1,67 en couche dense) et même que le verre (1,51), cette incorporation entraîne une augmentation de l'indice de réfraction de la couche dopée et une diminution de ses performances antireflets.

DE 10 2005 020 168 et DE 10 2007 058 927 décrivent des couches anti-réfléchissantes à base de silice. L'invention a notamment pour objectif de pallier ces derniers inconvénients en résolvant le problème technique, à savoir fournir une couche anti-réfléchissante poreuse qui possède une résistance mécanique et chimique suffisante, tout en n'affectant pas de façon préjudiciable la transmission lumineuse au travers du substrat verrier qu'elle recouvre, voire en l'améliorant.

L'invention, dans au moins un de ses modes de réalisation a encore pour objectif de fournir une solution aux désavantages de l'art antérieur qui soit simple, rapide et économique.

Un autre objectif de l'invention, dans au moins un de ses modes de réalisation, est de mettre en oeuvre un procédé de fabrication d'un substrat verrier comportant une couche anti-réfléchissante, ledit procédé étant aisé et flexible.

Conformément à un mode de réalisation particulier, l'invention concerne un substrat verrier comprenant une feuille de verre munie sur au moins une partie d'au moins une de ses faces d'une couche anti-réfléchissante poreuse, ladite couche comprenant majoritairement de l'oxyde de silicium, SiO₂ présent sous forme (i) d'une matrice de type sol-gel et (ii) de particules.

Selon l'invention la couche anti-réfléchissante poreuse comprend en outre de l'oxyde d'aluminium en quantité, exprimé sous forme de Al₂O₃, supérieure ou égale à 2,5% et inférieure ou égale à 4,1% en poids et en ce qu'elle comprend également au moins 60 % en poids de particules et au plus 75 % en poids de particules, plus préférentiellement au plus 70 % en poids de particules, le plus préférentiellement au plus 65 % en poids de particules par rapport au poids total d'oxyde de silicium.

Ainsi, l'invention repose sur une approche tout à fait nouvelle et inventive car elle permet de solutionner les inconvénients de l'art antérieur et de résoudre le problème technique posé. Les inventeurs ont en effet mis en évidence qu'il était possible, en combinant
- une matrice de type sol-gel d'oxyde de silicium ;
- des particules d'oxyde de silicium dans une quantité bien précise ; et
- de l'oxyde d'aluminium dans une quantité bien précise également ;
d'obtenir une couche anti-réfléchissante possédant une bonne résistance mécanique et chimique mais surtout montrant des propriétés anti-réfléchissantes améliorées. Ce résultat est très surprenant dans la mesure où, comme on l'a mentionné précédemment, l'oxyde d'aluminium (ou alumine) possède intrinsèquement un indice de réfraction plus élevé que la silice. En outre, les inventeurs ont déterminé que de manière surprenante une couche anti-réfléchissante comprenant au moins 60 % en poids de particules et au plus 75 % en poids de particules, plus préférentiellement au plus 70 % en poids de particules, le plus préférentiellement au plus 65 % en poids de particules, par rapport au poids total d'oxyde de silicium permet d'obtenir un compromis entre, d'une part, l'amélioration des propriétés antireflets de la couche et, d'autre part, la résistance mécanique de la couche. Par ailleurs, les inventeurs ont également déterminé que de manière surprenante l'addition d'oxyde d'aluminium en quantité importante, exprimé sous forme de Al₂O₃, supérieure ou égale à 2,5% et inférieure ou égale à 4,1% en poids, permet d'améliorer les propriétés antireflets de la couche tout en gardant la quantité de silice colloïdale constante, cette amélioration de la performance optique de la couche anti-réfléchissante ne s'accompagnant pas d'une détérioration de la durabilité mécanique de la couche anti-réfléchissante.

Selon une mode préféré de réalisation, le substrat verrier selon l'invention comprend, consiste, consiste essentiellement en une feuille de verre munie sur au moins une partie d'au moins une de ses faces d'une couche anti-réfléchissante poreuse, ladite couche comprenant majoritairement de l'oxyde de silicium, SiO₂ présent sous forme (i) d'une matrice de type sol-gel et (ii) de particules, tel que la couche anti-réfléchissante poreuse comprend en outre de l'oxyde d'aluminium en quantité, exprimé sous forme de Al₂O₃, allant de 2,5% à 4,1% en poids, et telle qu'elle comprend également entre 60% et 75% en poids de particules, préférentiellement entre 60% et 70% en poids de particules, le plus préférentiellement entre 60% et 65% en poids de particules, par rapport au poids total d'oxyde de silicium.

Selon l'invention, le substrat verrier comprend une feuille de verre. Le verre selon l'invention peut appartenir à diverses catégories. Le verre peut ainsi être un verre de type sodo-calcique, un verre au bore, un verre comprenant un ou plusieurs additifs répartis de manière homogène dans sa masse, tels que, par exemple, au moins un colorant inorganique, un composé oxydant, un agent régulateur de la viscosité et/ou un agent facilitant la fusion. De préférence, le verre de l'invention est de type sodo-calcique. Le verre de l'invention peut être un verre flotté, un verre étiré ou un verre imprimé ou texturé par exemple par un rouleau ou par attaque acide ou alcaline. Il peut être clair, extra-clair, sablé et/ou maté, de préférence le verre est un verre extra-clair. L'expression "verre sodo-calcique" est utilisée ici dans son sens large et concerne tout verre qui contient les composants de base suivants (exprimés en pourcentages en poids total de verre) :

| | |
|---|---|
| SiO₂ | 60 à 75 % |
| Na₂O | 10 à 20 % |
| CaO | 0 à 16 % |
| K₂O | 0 à 10 % |
| MgO | 0 à 10 % |
| Al₂O₃ | 0 à 5 % |
| BaO | 0 à 2 % |
| BaO + CaO + MgO | 10 à 20 % |
| K₂O + Na₂O | 10 à 20 % |

Elle désigne aussi tout verre comprenant les composants de base précédents qui peut comprendre en outre un ou plusieurs additifs.

La feuille de verre de l'invention peut avoir une épaisseur variant, par exemple, de 2 à 10 mm.

Selon un mode de réalisation préféré, en particulier dans le cas d'applications solaires, la feuille de verre est une feuille de verre imprimé ou texturé, c'est-à-dire qui présente un relief macroscopique, par exemple sous forme de motifs du type pyramide ou cône, les motifs pouvant être convexes (en excroissance par rapport au plan général de la face imprimée) ou concaves (en creux dans la masse du verre). De préférence, la feuille de verre est imprimée ou texturée sur au moins une de ses faces. Un tel substrat verrier à la fois texturé et revêtu d'une couche anti-réfléchissante cumule l'effet de piégeage de la lumière et l'effet antireflet.

Selon ce mode de réalisation préféré, la face du substrat verrier qui est revêtue de la couche poreuse est, de manière avantageuse, celle qui n'est pas texturée.

De manière préférée, dans le cas d'applications solaires, la feuille de verre est faite d'un verre extra-clair. Par verre extra-clair, on entend un verre dont la composition comprend moins de 0,06 % en poids de fer total, exprimé sous forme de Fe₂O₃, et de préférence, moins de 0,02 % en poids de fer total, exprimé sous forme de Fe₂O₃.

Selon l'invention, et en l'absence de précision, on comprend par "couche", soit une couche unique (monocouche) soit une superposition de strates (multicouche). Selon un mode de réalisation avantageux, la couche peut être sous forme d'une superposition de strates. On peut préférer notamment fabriquer des strates de plus en plus poreuses en s'éloignant du substrat porteur, et/ou des strates d'épaisseurs différentes, ceci afin d'améliorer davantage l'effet antireflet.

Selon l'invention, le substrat verrier est revêtu par la couche anti-réfléchissante poreuse sur au moins une partie d'au moins une de ses faces. La couche peut s'étendre de façon continue sur substantiellement toute la surface du substrat, par exemple sur plus de 90% de sa surface, préférentiellement sur plus de 95% de sa surface. Alternativement, la couche peut recouvrir partiellement la surface du substrat. Le substrat peut également être revêtu sur chacune de ses faces, partiellement ou totalement de ladite couche.

Selon l'invention, la couche anti-réfléchissante poreuse comprend majoritairement de l'oxyde de silicium présent sous forme (i) d'une matrice de type sol-gel et (ii) de particules.

Par une couche comprenant majoritairement de l'oxyde de silicium, on entend que la couche selon l'invention, est constituée d'oxyde de silicium, SiO₂ à raison d'au moins 80% en poids par rapport au poids total de la couche, et de préférence, d'au moins 90% en poids.

Selon l'invention, la matrice de SiO₂ est une phase solide essentiellement continue et amorphe. Elle est obtenue par le procédé sol-gel bien connu. Cette matrice constituera le « liant » des particules de silice également présentes dans la couche. C'est l'association de la matrice issue d'un procédé sol-gel avec les particules (agent porogène) qui va générer la structure poreuse de la couche de l'invention.

Les particules de l'invention peuvent être pleines ou creuses. Elles peuvent, par exemple, être de forme quasi sphérique ou allongée (en forme de bâtonnets, par exemple). Préférentiellement, les particules ont une forme allongée, plus préférentiellement ont une forme de bâtonnets, les inventeurs ayant déterminé que ce type de particules permet d'obtenir une porosité allant jusqu'à 50% en volume d'air emprisonné et de ce fait l'utilisation de ce type de particules assure un effet anti-réfléchissant accru. En comparaison un empilement aléatoire de particules sphériques permet d'obtenir une porosité maximale de l'ordre de 36% et un empilement hexagonal compact de ces mêmes particules sphériques une porosité maximale de l'ordre de 24%.

Selon un mode de réalisation préféré de l'invention, les particules sont des nanoparticules.

De manière préférée, les particules de l'invention ont une taille qui n'est pas inférieure à 2 nm et, de préférence, qui n'est pas inférieure à 5 nm. De plus, les particules ont une taille qui n'est pas supérieure à 500 nm et de préférence, qui n'est pas supérieure à 250 nm. Par taille, on entend désigner la plus grande dimension des particules (le diamètre pour une sphère, la longueur pour une particule allongée, etc).

La couche selon l'invention peut comporter des particules de tailles et/ou de formes différentes ou semblables, de préférence lesdites particules formant des chaînes.

Selon un mode de réalisation préféré de l'invention, la couche anti-réfléchissante poreuse a une épaisseur qui est comprise entre 50 nm et 300 nm, préférentiellement comprise entre 70 nm et 250 nm, plus préférentiellement comprise entre 80 nm et 200 nm, le plus préférentiellement comprise entre 80 nm et 150 nm. Les inventeurs ayant déterminé que de manière surprenante de telles épaisseurs de couche antireflet permettent d'obtenir des performances opto-énergétiques améliorées particulièrement dans le domaine des longueurs d'onde allant de 400 à 1100 nm.

Selon un autre mode de réalisation préféré, une sous-couche sensiblement non-poreuse est interposée entre la feuille de verre et la couche anti-réfléchissante. Par sous-couche sensiblement non poreuse, on entend une couche dite « dense », en d'autres termes une sous couche présentant une densité plus élevée que la couche anti-réfléchissante poreuse. La sous-couche de l'invention peut par exemple jouer le rôle de barrière aux alcalins.

Selon ce mode de réalisation, la sous-couche comprend de préférence au moins un composé choisi parmi l'oxyde de zirconium, l'oxyde de titane, l'oxyde d'aluminium, l'oxyde de silicium et l'oxynitrure de silicium. De manière préférée, la sous-couche comprend majoritairement un composé choisi parmi l'oxyde de zirconium, l'oxyde de titane, l'oxyde d'aluminium, l'oxyde de silicium et l'oxynitrure de silicium. De manière plus préférée, la sous-couche comprend majoritairement de l'oxyde de silicium. Par une sous-couche comprenant majoritairement un des composés parmi la liste ci-dessus, on entend une sous-couche constituée dudit composé à raison d'au moins 80% en poids par rapport au poids total de la couche, et de préférence, d'au moins 90% en poids. De préférence, la sous-couche comprend un composé choisi parmi l'oxyde de zirconium, l'oxyde de titane, l'oxyde d'aluminium, l'oxyde de silicium et l'oxynitrure de silicium, ledit composé étant associé avec un composé additionnel sélectionné parmi l'oxyde de zirconium, l'oxyde de titane, l'oxyde d'aluminium, l'oxyde de silicium. Le ou les oxydes additionnels peuvent représenter au plus 10% en poids de l'ensemble et de préférence au plus 5%. Le plus préférentiellement, la sous-couche est à base d'oxyde de silicium, ledit oxyde de silicium étant associé à au moins un autre oxyde sélectionné parmi le groupe comprenant l'oxyde de zirconium, l'oxyde de titane, l'oxyde d'aluminium. Les proportions respectives d'oxyde de silicium et des autres oxydes étant telles que la valeur de l'indice de réfraction de la sous-couche est comprise entre les valeurs de l'indice de réfraction de la feuille de verre et l'indice de réfraction de la couche anti-réfléchissante poreuse, lesdits indices de réfractions étant mesurés à une longueur d'onde de 550 nm. De préférence, la sous-couche a une épaisseur qui est comprise entre 5 nm et 200 nm, préférentiellement comprise entre 50 nm et 150 nm.

La sous-couche selon l'invention peut également être déposée par la méthode sol-gel mais aussi par la méthode de dépôt en phase vapeur (CVD) ou par pulvérisation cathodique. Préférentiellement, la sous-couche est déposée par méthode sol-gel, les inventeurs ayant déterminé que de manière surprenante une sous-couche déposée par méthode sol-gel permet d'obtenir une meilleure adhésion de la couche anti-réfléchissante poreuse, plus particulièrement lorsque ladite sous-couche est soumise, après application de la solution sol-gel à l'origine de ladite sous-couche sur la feuille de verre et de préférence avant application de la solution sol-gel à l'origine de la couche anti-réfléchissante poreuse, à un traitement thermique inférieur ou égal à une température de 200°C. En outre, les inventeurs ont déterminé que de manière surprenante une sous-couche déposée par méthode sol-gel bien que moins dense présente une propriété barrière aux alcalins suffisante.

Le substrat verrier selon l'invention peut également comprendre une surcouche, déposée sur la couche anti-réfléchissante. Une telle surcouche peut par exemple renforcer davantage la durabilité chimique de la couche anti-réfléchissante en cas d'applications en extérieurs ou en milieu humide, par exemple.

Un autre objet de l'invention concerne le procédé de fabrication du substrat verrier comportant une couche anti-réfléchissante selon l'invention. Ledit procédé est tel qu'il comprend les étapes de formation de la couche anti-réfléchissante suivantes, dans l'ordre :
a) la préparation d'un « sol » d'un précurseur à base de silicium dans un solvant notamment aqueux et/ou alcoolique à pH acide;
b) l'ajout d'un précurseur à base d'aluminium dans le sol préparé à l'étape (a);
c) le mélange du « sol » avec des particules de silice ;
d) le dépôt sur une feuille de verre du mélange sol/particules ; et
e) le traitement thermique de la feuille de verre revêtue, avantageusement ledit traitement correspond au traitement de trempe de la feuille de verre lorsqu'une trempe thermique de ladite feuille est nécessaire ;
les deux premières étapes peuvent être réalisées simultanément ou bien successivement. Le précurseur à base de silicium est de préférence un composé hydrolysable tel qu'un alkcoxyde de silicium. Le précurseur à base d'aluminium peut être choisi notamment parmi les alkoxydes, le nitrate ou l'acétylacétonate.

De manière avantageuse, les particules de silice sont ajoutées au sol sous forme de dispersion dans un liquide (par exemple, de l'eau).

Le dépôt sur le substrat du mélange sol/particules peut être réalisé par pulvérisation, par immersion et tirage à partir du sol de silice (*dip* coating), par centrifugation (*spin coating*), par coulée (*flow-coating*) ou par rouleau (*roll coating*).

Le procédé peut de préférence comprendre une étape de séchage ou d'élimination du ou des solvant(s), à une température inférieure à environ 200°C, de préférence inférieure à environ 150°C, intervenant juste après l'étape de dépôt et avant le traitement thermique de la feuille de verre revêtue de l'étape (e)).

Selon une mise en oeuvre avantageuse, le procédé de fabrication du substrat verrier selon l'invention est tel qu'il comprend préalablement au dépôt de la couche anti-réfléchissante, les étapes suivantes, dans l'ordre :
1) la préparation d'un « sol » d'un précurseur à base de silicium dans un solvant notamment aqueux et/ou alcoolique à pH acide;
2) l'ajout d'un précurseur à base d'aluminium et/ou de zirconium dans le sol préparé à l'étape (1);
3) le dépôt sur une feuille de verre du mélange de la solution résultant des étapes 1) et 2) par pulvérisation, par immersion et tirage à partir de la solution de silice (dip coating), par centrifugation (spin coating), par coulée (flow-coating) ou par rouleau (roll coating); et
4) le traitement thermique de séchage ou d'élimination du ou des solvant de la feuille de verre revêtue à une température inférieure ou égale à 200 °C, préférentiellement inférieure ou égale à 150 °C,
les deux premières étapes peuvent être réalisées simultanément ou bien successivement. Le précurseur à base de silicium est de préférence un composé hydrolysable tel qu'un alkcoxyde de silicium. Le précurseur à base d'aluminium et/ou de zirconium peut être choisi notamment parmi les alkoxydes, le nitrate ou l'acétylacétonate.

Le traitement thermique de la feuille de verre revêtue de toutes ses couches peut être réalisé à des températures de l'ordre de 300°C à 720°C, préférentiellement de l'ordre de 300°C à 680°C, par exemple de l'ordre de 300°C à 650°C ou par exemple de 300°C à 550°C et permet la condensation/la formation de la couche poreuse à base de silice et d'alumine.

Le substrat verrier revêtu selon l'invention peut ultérieurement également être traité thermiquement en vue de sa trempe ou en vue de son bombage. De manière avantageuse, la dernière étape du procédé de l'invention (condensation/formation de la couche) peut également correspondre à un traitement thermique en vue de la trempe ou du bombage du substrat, si elle est réalisée dans des conditions adaptées respectivement pour ces deux opérations (typiquement à des températures qui ne sont pas inférieures à 500°C et même de l'ordre de 600-700°C). La couche poreuse selon l'invention peut en effet supporter un tel traitement thermique sans altération significative de ses propriétés opto-énergétiques.

Des substrats verriers conformes à l'invention peuvent avoir des applications variées. Ces substrats peuvent être utilisés comme vitrage pour des aquariums, des vitrines (intérieures ou extérieures), des serres, des cadres ou tableaux, etc. Ils peuvent également être utilisés dans des domaines tels que le transport aéronautique, maritime, terrestre (par ex. des pare-brises), pour le bâtiment, ou pour l'électroménager. De manière très avantageuse, ils peuvent être utilisés dans des applications du type solaire. Il s'agit notamment des panneaux solaires, en particulier les collecteurs solaires thermiques ou encore les cellules photovoltaïques.

Ainsi, l'invention a aussi pour objet une cellule solaire comprenant le substrat verrier revêtu d'une couche anti-réfléchissante selon l'invention.

D'autres caractéristiques et avantages de l'invention apparaîtront plus clairement à la lecture de la description suivante de modes de réalisation préférentiels, donnés à titre de simples exemples illustratifs et non limitatifs, et des figures annexées, parmi lesquels :

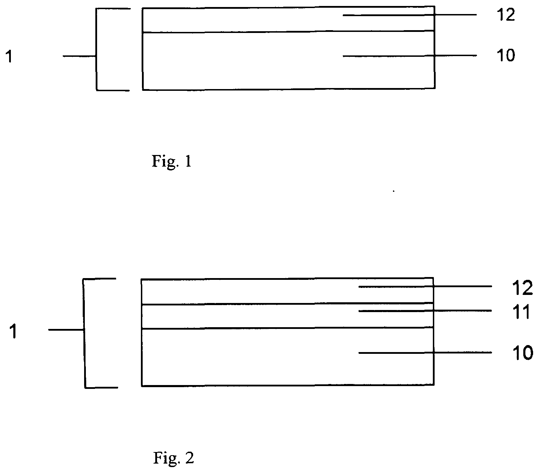

La figure 1 représente une coupe transversale d'un substrat verrier selon l'invention (1) comprenant une feuille de verre (10) et une couche anti-réfléchissante poreuse (12).
La figure 2 représente une coupe transversale d'un substrat verrier selon l'invention (1) comprenant une feuille de verre (10), une sous couche (11) et une couche anti-réfléchissante poreuse (12).

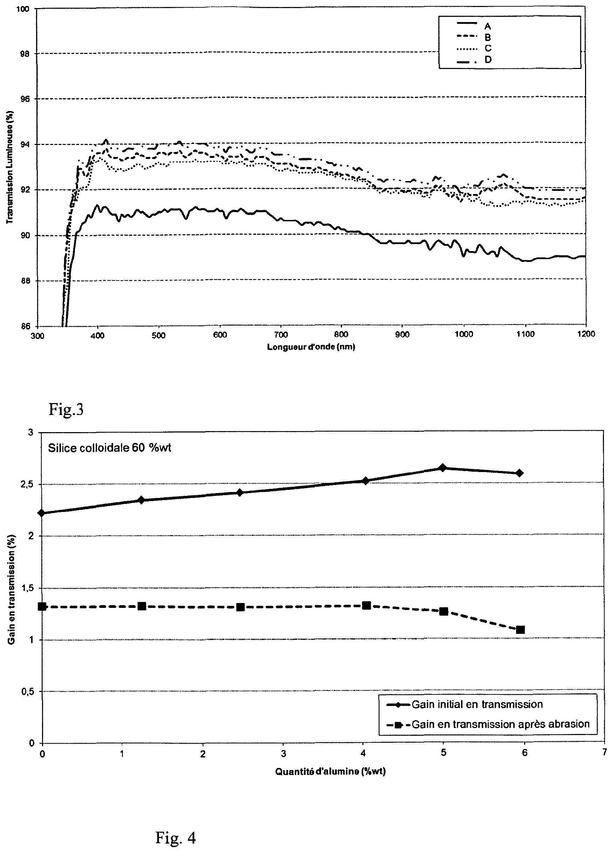

La figure 3 représente un graphique montrant les profils en transmission d'un substrat verrier selon l'invention (B), d'un substrat verrier revêtu d'une couche anti-réfléchissante poreuse non conforme à l'invention ne contenant pas d'oxyde d'aluminium (C), d'un substrat verrier revêtu d'une couche anti-réfléchissante poreuse non conforme à l'invention contenant une quantité d'oxyde d'aluminium de 6,0% en poids (D) et d'un substrat verrier non revêtu de même nature (A).
La figure 4 représente un graphique montrant l'évolution du gain en transmission d'un substrat verrier selon l'invention en fonction de la quantité d'alumine présente dans la couche antireflet dudit substrat verrier par rapport à un substrat verrier non revêtu de même nature et ce pour une couche anti-réfléchissante poreuse dont la quantité de particules de silice constitue 60 % en poids de la silice totale.

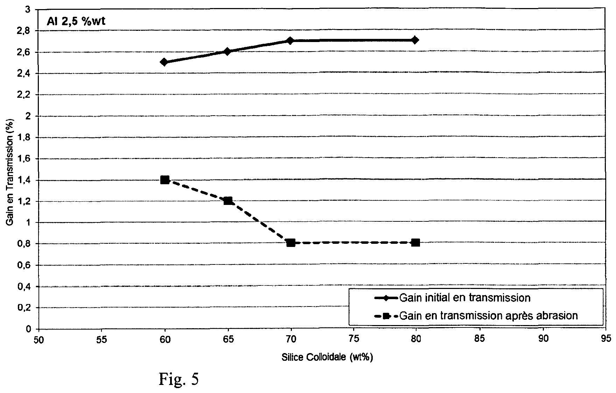

La figure 5 représente un graphique montrant l'évolution du gain en transmission d'un substrat verrier selon l'invention en fonction du pourcentage en poids de silice colloïdale et ce à quantité d'alumine constante (2,5 % en poids) dans la couche antireflet dudit substrat verrier par rapport à un substrat verrier non revêtu de même nature.

Les exemples qui suivent illustrent l'invention, sans intention de limiter de quelque façon sa couverture.

### Exemples

- *Formulation pour la sous-couche*: On a préparé une solution en mélangeant de l'acide nitrique (0,090 kg) avec de l'eau distillée (11,850 kg) et de l'éthanol (80,180 kg). On a additionné à ce mélange du tetraéthylorthosilicate (7,670 kg) puis la solution a été laissée à réagir pendant une heure à température ambiante sous agitation. On rajoute ensuite de l'acetylacetonate de zirconium (0,180 kg). La solution a été mise sous agitation pour une période supplémentaire de 30 minutes.
- *Mélange 1 (comparatif)* : Une formulation est préparée en mélangeant de l'éthanol (53,230 kg), du butanol (24,000 kg), de la 4-hydroxy-4-methyl-pentan-2-one (16,000 kg). A ce mélange, on a ajouté de l'acide nitrique (0,015 kg) et de l'eau distillée (1,980 kg). Ensuite, on a ajouté du tetraéthylorthosilicate (TEOS - 1,280 kg) puis la solution a été laissée à réagir sous agitation pendant une heure à température ambiante afin de permettre l'hydrolyse du précurseur à base de silicium. Après cette période d'agitation, des particules de silice dispersées dans l'eau (silice colloïdale Snowtex OUP de chez Nissan Chemical Industries Ltd. - 3,430 kg) ont finalement été ajoutées au « sol » obtenu à l'étape précédente. La silice colloïdale Snowtex OUP est constituée de particules allongées de silice possédant des dimensions caractéristiques de l'ordre de 9-15 nm et 40-100 nm et formant des chaînes de particules reliées entre elles.

Cette formulation correspond à une quantité de particules de silice de 59 % en poids de silice totale.
- Mélange 2 (comparatif) : Une formulation est préparée en mélangeant de l'éthanol (52,920 kg), du butanol (24,000 kg), de la 4-hydroxy-4-methyl-pentan-2-one (16,000 kg). A ce mélange, on a ajouté de l'acide nitrique (0,015 kg) et de l'eau distillée (1,930 kg). Ensuite, on a ajouté du tetraéthylorthosilicate (TEOS - 1,250 kg) puis la solution a été laissée à réagir sous agitation pendant une heure à température ambiante afin de permettre l'hydrolyse du précurseur à base de silicium. On a additionné ensuite de l'acétylacétonate d'aluminium, Al(acac)3 (0,360 kg) et la solution a été mise de nouveau sous agitation pour une période supplémentaire de 30 minutes Après cette période d'agitation, des particules de silice dispersées dans l'eau (silice colloïdale Snowtex OUP de chez Nissan Chemical Industries Ltd. - 3,490 kg) ont finalement été ajoutées au « sol » obtenu à l'étape précédente. La silice colloïdale Snowtex OUP est constituée de particules allongées de silice possédant des dimensions caractéristiques de l'ordre de 9-15 nm et 40-100 nm et formant des chaînes de particules reliées entre elles.

Cette formulation correspond à une quantité de particules de silice de 60 % en poids de silice totale et à une quantité d'oxyde d'aluminium, exprimé sous forme de Al₂O₃, de 6,0 % en poids.
- *Mélange 3 (selon l'invention)* : Une formulation a été préparée en mélangeant de l'éthanol (53,040 kg), du butanol (24,000 kg), de la 4-hydroxy-4-méthyl-pentan-2-one (16,000 kg). A ce mélange, on a ajouté de l'acide nitrique (0,0150 kg) et de l'eau distillée (1,930 kg). Ensuite, on a ajouté du tetraéthylorthosilicate (TEOS, 1,250 kg) puis la solution a été laissée à réagir sous agitation pendant une heure à température ambiante afin d'obtenir un « sol ». On a additionné ensuite de l'acétylacétonate d'aluminium, Al(acac)₃ (0,240 kg) et la solution a été mise de nouveau sous agitation pour une période supplémentaire de 30 minutes. Après cela, la silice colloïdale Snowtex OUP (3,490 kg) de chez Nissan Chemical Industries Ltd. a finalement été ajoutée.

Cette formulation correspond à une quantité de particules de silice de 60,0 % en poids de silice totale et à une quantité d'oxyde d'aluminium, exprimé sous forme de Al₂O₃, de 4,0 % en poids.
- *Dépôt sur le verre :* La formulation pour la sous-couche a été déposée sur une des faces de trois feuilles de verre extra-clair de 10 cm x 10 cm par un procédé de « dip coating » (immersion puis tirage). Les substrats ainsi obtenus ont été séchés dans une étuve à 120°C pour 10 minutes. Dans un second temps, le mélange 1, 2 ou 3 a été déposé sur un des substrats obtenus, également par un procédé de « dip coating » dans des conditions expérimentales identiques pour chacun. Le traitement thermique de l'assemblage final feuille de verre/sous-couche/couche a été réalisé au cours d'un processus de trempe thermique du verre, réalisé dans des conditions classiques (680°C pendant 180 secondes).
- *Propriétés optiques :* Les propriétés optiques des substrats verriers revêtus au départ des mélanges 1, 2 et 3 (respectivement, substrat 1, 2 et 3) sont représentées dans le graphique de la Figure 3, représentant la transmission T entre 300 et 1200 nm (courbe (C) pour le substrat 1 courbe (D) pour le substrat 2 et courbe (B) pour le substrat 3). Elles sont comparées à celles d'un substrat de verre identique, mais non revêtu (référence, courbe (A)). Ce propriétés optiques sont mesurées selon la norme ISO 9050 :2003.

On observe une augmentation de 2,2% en transmission lumineuse sur l'intervalle 300-1100 nm pour le substrat obtenu avec le mélange 1 par rapport à la référence.

On observe une augmentation de 2,6% en transmission lumineuse sur l'intervalle 300-1100 nm pour le substrat obtenu avec le mélange 2 par rapport à la référence.

On observe une augmentation de 2,5% en transmission lumineuse sur l'intervalle 300-1100 nm pour le substrat verrier selon l'invention produit avec le mélange 3 par rapport à la référence.

Dès lors, une augmentation de la performance de la couche anti-réfléchissante selon l'invention (augmentation de la transmission de 0,3%) est obtenue en combinant de l'alumine avec une matrice sol-gel et des particules de silice, dans des quantités données. Un tel gain est vraiment significatif, en particulier dans le domaine des applications solaires où la moindre augmentation de la transmission lumineuse peut entraîner une augmentation très significative du rendement.

De plus, les substrats verriers obtenus au départ des mélanges 1, 2 et 3 ont été soumis à des tests destinés à évaluer leur durabilité chimique et mécanique. En particulier, le maintien de leurs performances opto-énergétiques au cours de tests en conditions drastiques a été vérifié. Les résultats obtenus sont repris dans le tableau ci-dessous.

| | | **Substrat 1 (comparatif)** | **Substrat 2 (comparatif)** | **Substrat 3** |
|---|---|---|---|---|
| **Gain initial en transmission (avant test)** | | 2,2 % | 2.6% | 2,5 % |
| **Gain en transmission après test** | Test d'abrasion (500 cycles) | 1,4 % | 1.1% | 1,4% |
| | (norme EN 1096-2) | | | |
| | Test d'humidité (1000h) | 2,0 % | - | 2,3 % |
| | (norme IEC 61215) | | | |
| | Test sous pression (9h) | 1,8 % | - | 2,0 % |
| | Cycles thermiques (1500h) | 1,8 % | - | 2,5 % |
| | (norme IEC61215) | | | |
| | Test salin (4 jours) | 2,1 % | - | 2,4 % |
| | (norme IEC1701) | | | |
| | Test salin (21 jours) | 2,1 % | - | 2,2 % |
| | (norme EN1096-2) | | | |

L'amélioration de la performance opto-énergétique du substrat selon l'invention (substrat 3) ne s'accompagne donc pas d'une détérioration de la durabilité mécanique ou chimique de la couche anti-réfléchissante. Dans l'ensemble, les propriétés de durabilité chimique et mécanique de la couche selon l'invention sont similaires à celles de la couche anti-réfléchissantes de l'exemple comparatif (substrat 1) pour tous les tests classiques réalisés. En outre, la comparaison du gain en transmission avant et après abrasion montre l'intérêt de limiter la quantité d'oxyde d'aluminium dans la couche anti-réfléchissante poreuse, la diminution du gain en transmission après abrasion étant plus importante pour le substrat 2, non conforme à l'invention, comprenant une quantité d'oxyde d'aluminium exprimé sous forme de Al₂O₃, de 6,0 % en poids que pour le substrat 3 conforme à l'invention, ledit substrat 3 comprenant une quantité d'oxyde d'aluminium, exprimé sous forme de Al₂O₃, de 4,1 % en poids. Cet effet est exemplifié à la figure 4 qui montre l'évolution du gain en transmission de la couche anti-réfléchissante poreuse avant et après abrasion, en fonction de la quantité d'oxyde d'aluminium présent dans la couche anti-réfléchissante poreuse et ce pour une couche anti-réfléchissante poreuse dont la quantité de particules de silice constitue 60 % en poids de la silice totale. On observe que le meilleur compromis entre, d'une part, le gain en transmission et, d'autre part, la résistance à l'abrasion, est obtenu pour des quantité d'oxyde d'aluminium, exprimé sous forme de Al₂O₃, allant de 2,0 % à 5,0 % en poids, préférentiellement allant de 2,0% à 4.1% en poids, plus préférentiellement de 2,5 % à 4,1% en poids.

Par ailleurs, la comparaison du gain en transmission avant abrasion montre l'intérêt de l'addition d'oxyde d'aluminium dans la couche anti-réfléchissante poreuse, la d'augmentation du gain en transmission avant abrasion étant plus importante pour le substrat 3 conforme à l'invention que pour le substrat 1, non conforme à l'invention, ne comprenant pas d'oxyde d'aluminium.

La figure 5 montre l'évolution du gain en transmission de la couche anti-réfléchissante poreuse avant et après abrasion, en fonction de la quantité de silice colloïdale présente dans la couche et ce pour une couche anti-réfléchissante poreuse contenant une quantité d'oxyde d'aluminium, exprimé sous forme de Aₗ₂O₃ égale à 2,5% en poids. On observe que le meilleur compromis entre, d'une part, le gain en transmission et, d'autre part, la résistance à l'abrasion est obtenu pour des quantités de particules de silice comprise 55 % et 80 % en poids de particules, préférentiellement entre 60 % et 75 % en poids de particules, plus préférentiellement entre 60 % et 70 % en poids de particules, le plus préférentiellement entre 60 % et 65 % en poids de particules, par rapport au poids total d'oxyde de silicium.

## Revendications

1. Substrat verrier (1) comprenant une feuille de verre (10) munie sur au moins une partie d'au moins une de ses faces d'une couche anti-réfléchissante poreuse (12), ladite couche (12) comprenant majoritairement de l'oxyde de silicium, SiO₂ présent sous forme (i) d'une matrice de type sol-gel et (ii) de particules ;
**caractérisé en ce que** ladite couche (12) comprend en outre de l'oxyde d'aluminium en quantité, exprimé sous forme de Al₂O₃, supérieure ou égale à 2,5% et inférieure ou égale à 4,1% en poids et **en ce qu'**elle comprend également au moins 60 % en poids de particules et au plus 75 % en poids de particules, plus préférentiellement au plus 70 % en poids de particules, le plus préférentiellement au plus 65% en poids de particules, par rapport au poids total d'oxyde de silicium.

2. Substrat verrier (1) selon une quelconque des revendications précédentes, **caractérisé en ce que** les particules ont une forme allongée, préférentiellement ont une forme de bâtonnets.

3. Substrat verrier (1) selon l'une quelconque des revendications précédentes, **caractérisé en ce que** les particules ont une taille qui est comprise entre 2 et 500 nm.

4. Substrat verrier (1) selon l'une quelconque des revendications précédentes, **caractérisé en ce que** les particules de silice forment des chaînes.

5. Substrat verrier (1) selon l'une quelconque des revendications précédentes, caractérisé en ce la couche anti-réfléchissante (12) a une épaisseur qui est comprise entre 50 et 300 nm. préférentiellement comprise entre 70 nm et 250 nm, plus préférentiellement comprise entre 80 nm et 200 nm, le plus préférentiellement comprise entre 80 nm et 150 nm.

6. Substrat verrier (1) selon l'une quelconque des revendications précédentes, **caractérisé en ce qu'**une sous-couche (11) sensiblement non-poreuse est interposée entre ladite feuille de verre (10) et ladite couche anti-réfléchissante (12).

7. Substrat verrier (1) selon la revendication précédente, **caractérisé en ce que** la sous-couche (11) comprend au moins un composé choisi parmi l'oxyde de zirconium, l'oxyde de titane, l'oxyde d'alumine, l'oxyde de silicium et l'oxynitrure de silicium.

8. Substrat verrier (1) selon la revendication précédente, **caractérisé en ce que** la sous-couche (11) comprend majoritairement un composé choisi parmi l'oxyde de zirconium, l'oxyde de titane, l'oxyde d'alumine, l'oxyde de silicium et l'oxynitrure de silicium, préférentiellement de l'oxyde de silicium.

9. Substrat verrier (1) selon l'une quelconque des revendications 6 à 8, **caractérisé en ce que** la sous-couche (11) a une épaisseur qui est comprise entre 5 et 200 nm.

10. Substrat verrier (1) selon l'une quelconque des revendications précédentes, **caractérisé en ce que** la feuille de verre (10) est en une feuille de verre de type sodo-calcique, de préférence en une feuille de verre extra-clair.

11. Procédé de fabrication du substrat verrier (1) selon une quelconque des revendications précédentes, **caractérisé en ce que** ledit procédé est tel qu'il comprend les étapes de formation de la couche anti-réfléchissante (12) suivantes, dans l'ordre :
a) la préparation d'un « sol » d'un précurseur à base de silicium dans un solvant notamment aqueux et/ou alcoolique à pH acide
b) l'ajout d'un précurseur à base d'aluminium dans le sol préparé à l'étape (a);
c) le mélange du « sol » avec des particules de silice ;
d) le dépôt sur une feuille de verre (10) du mélange sol/particules ; et
e) le traitement thermique de la feuille de verre (10) revêtue,
-les deux premières étapes peuvent être réalisées simultanément ou bien successivement

12. Procédé de fabrication selon la revendication 11, **caractérisé en ce qu'**il comprend préalablement au dépôt de la couche anti-réfléchissante (12), les étapes suivantes, dans l'ordre :
1. la préparation d'un « sol » d'un précurseur à base de silicium dans un solvant notamment aqueux et/ou alcoolique à pH acide;
2. l'ajout d'un précurseur à base d'aluminium et/ou de zirconium dans le sol préparé à l'étape (1) ;
3. le dépôt sur une feuille de verre (10) du mélange de la solution résultant des étapes 1 et 2 par pulvérisation, par immersion et tirage à partir de la solution de silice (dip coating), par centrifugation (spin coating), par coulée (flow-coating) ou par rouleau (roll coating); et
4. le traitement thermique de séchage ou d'élimination du ou des solvant de la feuille de verre (10) revêtue à une température inférieure ou égale à 200 °C. préférentiellement inférieure ou égale à 150 °C,
les deux premières étapes peuvent être réalisées simultanément ou bien successivement

13. Utilisation du substrat verrier (1) selon une quelconque des revendications précédentes dans des applications du type solaire, notamment des panneaux solaires, des collecteurs solaires thermiques ou des cellules photovoltaïques.

## Patentansprüche

1. Glassubstrat (1), umfassend eine Glasscheibe (10), die auf mindestens einem Teil mindestens einer ihrer Flächen mit einer porösen Antireflexionsschicht (12) versehen ist, wobei die Schicht (12) vorwiegend Siliciumoxid SiO₂ in Form von (i) einer Sol-Gel-Matrix und (ii) Teilchen umfasst;
**dadurch gekennzeichnet, dass** die Schicht (12) ferner Aluminiumoxid in einer als Al₂O₃ ausgedrückten Menge umfasst, die mindestens 2,5 % und höchstens 4,1 % des Gewichts beträgt, und dass sie außerdem mindestens 60 % des Gewichts der Teilchen und höchstens 75 % des Gewichts der Teilchen, bevorzugt höchstens 70 % des Gewichts der Teilchen, am meisten bevorzugt höchstens 65 % des Gewichts der Teilchen, bezogen auf das Gesamtgewicht des Siliciumoxids, umfasst.

2. Glassubstrat (1) nach Anspruch 1, **dadurch gekennzeichnet, dass** die Teilchen eine längliche Form, vorzugsweise eine Stabform, aufweisen.

3. Glassubstrat (1) nach einem der vorangehenden Ansprüche, **dadurch gekennzeichnet, dass** die Teilchen eine Größe zwischen 2 und 500 nm aufweisen.

4. Glassubstrat (1) nach einem der vorangehenden Ansprüche, **dadurch gekennzeichnet, dass** die Silicium-Teilchen Ketten bilden.

5. Glassubstrat (1) nach einem der vorangehenden Ansprüche, **dadurch gekennzeichnet, dass** die Antireflexionsschicht (12) eine Dicke zwischen 50 und 300 nm, bevorzugt zwischen 70 und 250 nm, noch bevorzugter zwischen 80 und 200 nm, am meisten bevorzugt zwischen 80 und 150 nm aufweist.

6. Glassubstrat (1) nach einem der vorangehenden Ansprüche, **dadurch gekennzeichnet, dass** zwischen der Glasscheibe (10) und der Antireflexionsschicht (12) eine im Wesentlichen nicht poröse Unterschicht (11) angeordnet ist.

7. Glassubstrat (1) nach Anspruch 6, **dadurch gekennzeichnet, dass** die Unterschicht (11) mindestens eine Verbindung, ausgewählt aus Zirkonoxid, Titanoxid, Aluminiumoxid, Siliciumoxid und Siliciumoxynitrid, umfasst.

8. Glassubstrat (1) nach Anspruch 7, **dadurch gekennzeichnet, dass** die Unterschicht (11) vorwiegend aus einer Verbindung besteht, die ausgewählt ist aus Zirkonoxid, Titanoxid, Aluminiumoxid, Siliciumoxid und Siliciumoxynitrid, vorzugsweise Siliciumoxid.

9. Glassubstrat (1) nach einem der Ansprüche 6 bis 8, **dadurch gekennzeichnet, dass** die Unterschicht (11) eine Dicke zwischen 5 und 200 nm aufweist.

10. Glassubstrat (1) nach einem der vorangehenden Ansprüche, **dadurch gekennzeichnet, dass** es sich bei der Glasscheibe (10) um eine Glasscheibe des Typs Calcium-Natron, vorzugsweise eine extra klare Glasscheibe, handelt.

11. Verfahren zur Herstellung des Glassubstrats (1) nach einem der vorangehenden Ansprüche, **dadurch gekennzeichnet, dass** das Verfahren so gestaltet ist, dass es die folgenden Schritte zur Bildung der Antireflexionsschicht (12) in der Reihenfolge umfasst:
a) Herstellen eines "Sols" einer Vorstufe auf Siliciumbasis in einem Lösungsmittel, insbesondere einem wässrigen und/oder alkoholischen mit saurem pH-Wert;
b) Hinzufügen einer Vorstufe auf Aluminiumbasis zu dem in Schritt (a) hergestellten Sols;
c) Mischen des "Sols" mit Siliciumdioxid-Teilchen;
d) Aufbringen des Sols/Teilchen-Gemischs auf eine Glasscheibe (10); und
e) Wärmebehandeln der beschichteten Glasscheibe (10),
wobei die ersten beiden Schritte gleichzeitig oder nacheinander ausgeführt werden können.

12. Herstellungsverfahren nach Anspruch 11, **dadurch gekennzeichnet, dass** es vor dem Aufbringen der Antireflexionsschicht (12) die folgenden Schritte in der Reihenfolge umfasst:
1. Herstellen eines "Sols" einer Vorstufe auf Siliciumbasis in einem Lösungsmittel, insbesondere einem wässrigen und/oder alkoholischen mit saurem pH-Wert;
2. Hinzufügen einer Vorstufe auf Aluminium- und/oder auf Zirconbasis zu dem in Schritt (1) hergestellten Sols;
3. Aufbringen des Lösungsgemischs aus den Schritten 1 und 2 auf eine Glasscheibe (10) durch Sprühen, Tauchen und Ziehen ausgehend von der Siliciumdioxid-Lösung (dip coating), durch Schleudern (spin coating), durch Fluten (flow-coating) oder Walzen (roll coating); und
4. Wärmebehandeln zum Trocknen oder Entfernen des Lösungsmittels von der beschichteten Glasscheibe (10) bei einer Temperatur von höchstens 200 °C, vorzugsweise höchstens 150 °C,
wobei die ersten beiden Schritte gleichzeitig oder nacheinander ausgeführt werden können.

13. Verwendung des Glassubstrats (1) nach einem der Ansprüche 1-10 in solaren Anwendungen, insbesondere Sonnenkollektoren, thermischen Sonnenkollektoren oder Photovoltaikzellen.

## Claims

1. Glass substrate (1) comprising a glass sheet (10) provided, on at least part of at least one of its faces, with a porous antireflective layer (12), said layer (12) predominantly comprising silicon oxide, SiO₂, present in the form (i) of a matrix of sol-gel type and (ii) of particles;
**characterized in that** said layer (12) also comprises aluminum oxide in an amount, expressed in the form of Al₂O₃, of greater than or equal to 2.5% and less than or equal to 4.1% by weight, and **in that** it also comprises at least 60% by weight of particles and not more than 75% by weight of particles, more preferentially not more than 70% by weight of particles and most preferentially not more than 65% by weight of particles relative to the total weight of silicon oxide.

2. Glass substrate (1) according claim 1, **characterized in that** the particles have an elongated shape, preferentially a rod shape.

3. Glass substrate (1) according to either one of the preceding claims, **characterized in that** the particles have a size of between 2 and 500 nm.

4. Glass substrate (1) according to any one of the preceding claims, **characterized in that** the silica particles form chains.

5. Glass substrate (1) according to any one of the preceding claims, **characterized in that** the antireflective layer (12) has a thickness of between 50 and 300 nm, preferentially between 70 nm and 250 nm, more preferentially between 80 nm and 200 nm and most preferentially between 80 nm and 150 nm.

6. Glass substrate (1) according to any one of the preceding claims, **characterized in that** a substantially non-porous undercoat (11) is interposed between said glass sheet (10) and said antireflective layer (12).

7. Glass substrate (1) according to claim 6, **characterized in that** the undercoat (11) comprises at least one compound chosen from zirconium oxide, titanium oxide, aluminum oxide, silicon oxide and silicon oxynitride.

8. Glass substrate (1) according to claim 7, **characterized in that** the undercoat (11) predominantly comprises a compound chosen from zirconium oxide, titanium oxide, aluminum oxide, silicon oxide and silicon oxynitride, preferentially silicon oxide.

9. Glass substrate (1) according to any one of Claims 6 to 8, **characterized in that** the undercoat (11) has a thickness of between 5 and 200 nm.

10. Glass substrate (1) according to any one of the preceding claims, **characterized in that** the glass sheet (10) is a sheet of glass of sodium-calcium type, preferably a sheet of extra-clear glass.

11. Process for manufacturing the glass substrate (1) according to any one of the preceding claims, **characterized in that** said process is such that it comprises the following steps for forming the antireflective layer (12), in this order:
a) the preparation of a "sol" of a silicon-based precursor in a solvent, which is especially aqueous and/or alcoholic, at acidic pH;
b) the addition of an aluminum-based precursor to the sol prepared in step (a);
c) the mixing of the "sol" with silica particles;
d) the deposition onto a glass sheet (10) of the sol/particles mixture; and
e) the heat treatment of the coated glass sheet (10),
the first two steps may be performed simultaneously or successively.

12. Manufacturing process according to Claim 11, **characterized in that** it comprises, prior to the deposition of the antireflective layer (12), the following steps, in this order:
1) the preparation of a "sol" of a silicon-based precursor in a solvent, which is especially aqueous and/or alcoholic, at acidic pH;
2) the addition of an aluminum-based and/or zirconium-based precursor to the sol prepared in step (1);
3) the deposition onto a glass sheet (10) of the mixture of the solution resulting from steps 1 and 2 by spraying, by dipping and withdrawing using the silica solution (dip coating), by centrifugation (spin coating), by pouring (flow coating) or by roller (roll coating); and
4) the heat treatment for drying or removal of the solvent(s) from the coated glass sheet (10) at a temperature of less than or equal to 200°C and preferentially less than or equal to 150°C,
the first two steps may be performed simultaneously or successively.

13. Use of the glass substrate (1) according to any one of claim 1 to 10, in applications of the solar type, especially solar panels, thermal solar collectors or photovoltaic cells.
